Europäisches Patentamt

European Patent Office

Office européen des brevets

(11) Publication number: **0 095 967**
**B1**

(12) **EUROPEAN PATENT SPECIFICATION**

(45) Date of publication of patent specification: **02.04.86**

(21) Application number: **83401007.6**

(22) Date of filing: **20.05.83**

(51) Int. Cl.⁴: **F 16 D 55/224**

(54) Disc brake assembly.

(30) Priority: **01.06.82 US 383663**

(43) Date of publication of application:
**07.12.83 Bulletin 83/49**

(45) Publication of the grant of the patent:
**02.04.86 Bulletin 86/14**

(84) Designated Contracting States:
**DE FR GB IT**

(56) References cited:
**FR-A-2 205 145**
**FR-A-2 308 016**
**GB-A-2 014 674**
**US-A-3 865 215**
**US-A-3 998 296**
**US-A-4 068 744**

(73) Proprietor: **ALLIED CORPORATION**
**Columbia Road and Park Avenue P.O. Box 2245R**
**(Law Dept.)**
**Morristown New Jersey 07960 (US)**

(72) Inventor: **Bolenbaugh, Daniel Lee**
**19400 Sunnyslope**
**South Bend Indiana 46614 (US)**
Inventor: **Herzog, Robert Eugene**
**1705 East McKinley Avenue**
**South Bend Indiana 46617 (US)**

(74) Representative: **Timoney, Ian Charles Craig et al**
**Service Brevets Bendix 44, rue François 1er**
**F-75008 Paris (FR)**

Courier Press, Leamington Spa, England.

## Description

This invention relates to a disc brake assembly, and, more particularly, to a "rail slider" disc brake wherein a pair of torque member arms movably support a caliper assembly.

A disc brake assembly comprises a torque member fixedly disposed adjacent a rotor to be braked and including a pair of arms extending axially over the periphery of the rotor, a caliper assembly movably carried by the pair of arms and cooperating with a pair of friction elements to urge the latter into engagement with the rotor during braking, and the caliper assembly including a pair of axially extending grooves for receiving the pair of arms.

In United States Patent 3,998,296 disclosing a disc brake assembly of the afore-said type a caliper assembly supports an outer shoe by means of gripping flanges on the outer shoe in engagement with surfaces machined on the caliper housing. In view of the double location for the gripping flanges, the caliper housing requires machining at several locations to permit attachment of the outer shoe thereto.

The present invention is characterized by one of said pair of grooves including a slot and one of said pair of friction elements is received within said slot and disposed in abutting relation with the wall of said one groove in order to attach said one friction element to said caliper assembly.

It is an advantage of the present invention that a groove required on the caliper assembly for slidably supporting the latter is utilized to support a friction element and the groove is slotted to permit ready engagement of the friction element to the caliper assembly.

The inventions will now be described with reference to the accompanying drawings wherein;

Figure 1 is a side view of a disc brake assembly constructed in accordance with the present invention;

Figure 2 is a view taken along line 2—2 of Figure 1;

Figure 3 is a cross-sectional view taken along line 3—3 of Figure 1;

Figure 4 is a right side view of Figure 1 showing only the caliper assembly; and

Figure 5 is a front view of Figure 1 showing only the outer friction element.

In a disc brake assembly 10 a torque member 12 is fixedly disposed adjacent a rotor 14. The torque member 12 includes a first portion 16 extending parallel to the rotor 14 and a pair of arms 18 and 20 extend from the first portion 16 over the periphery of the rotor 14 in a normal direction. The torque member defines a circumferentially extending recess 32 for receiving a caliper assembly 24. The caliper assembly carries a hydraulic actuator 26 on one side of the rotor 14 and extends to the other side of the rotor to include a reaction leg 28. During braking the hydraulic actuator 26 receives fluid pressure to directly urge an inner friction element 30 into engagement with the rotor 14. A reaction force generated by the friction element 30 biases the caliper assembly 24 to move an outer friction element 32 into engagement with the rotor 14.

The caliper assembly 24 defines a pair of recesses or grooves 34 and 36 extending axially from the hydraulic actuator 26 to the reaction leg 28. The recesses 34 and 36 are substantially V shaped with a radially outer surface and a radially inner surface. The recess 34 receives the torque member arm 18 and the recess 36 receives the torque member arm 20. In order to accommodate manufacturing tolerances and assist in movably supporting the caliper assembly 24 relative to the torque member 12, the arm 18 includes a key assembly 38 comprising a plate 40 secured via bolt 42 to the arm 18 and a leaf spring 44 carried within a plate groove 46 to slidably engage the outer surface of recess 34.

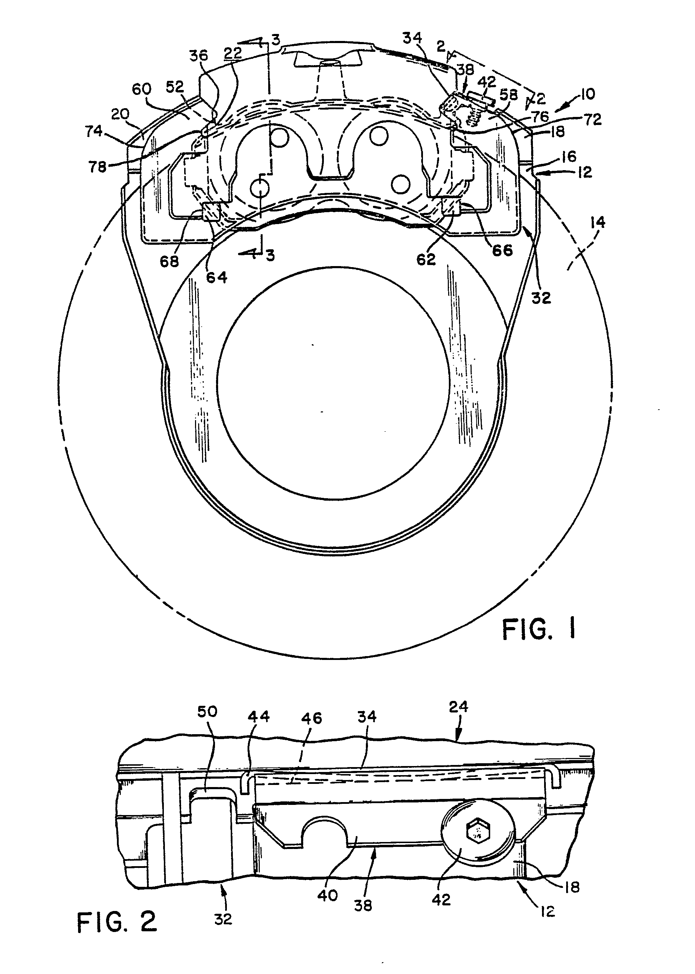

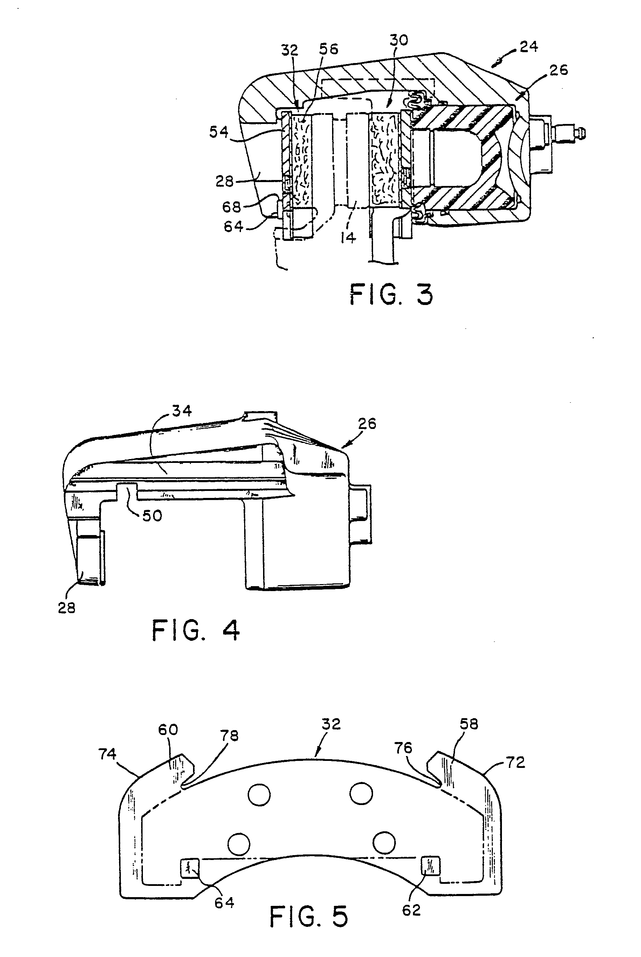

In accordance with the invention, the axially extending recesses 34 and 36 are provided with slots 50 and 52, slot 50 being more clearly illustrated in Figures 2 and 4. The outer friction element 32 includes a backing plate 54 which carries a friction pad 56 engageable with the rotor 14. The backing plate includes a pair of ears 58 and 60 which extend radially outwardly past the friction pad and circumferentially toward each other. The ears 58 and 60 fit into the slots 50 and 52, respectively, to engage the surfaces of the recesses 34 and 36. The slots 50 and 52 are adjacent but slightly spaced from the leg 28 to permit the ears to move within the recesses to abut the backing plate 54 with the leg 28 and space the ears from the slots. Also, the backing plate 54 is provided with a pair of projections 62 and 64 and the leg 28 is provided with a pair of steps 66 and 68 so that when the friction element 32 is moved into engagement with the leg 28, the projection 62 and 64 fit into the steps to abut the surfaces of the steps. Consequently, the ears 58 and 60 cooperate with the recesses 34 and 36 and the projections 62 and 64 cooperate with the steps 66 and 68 to connect the outer friction element with the caliper assembly.

The inner friction element 30 is carried by the torque member 12 in a conventional manner so that braking torque developed by the inner friction element is transmitted directly to the torque member while braking torque developed by the outer friction element is transmitted to the caliper assembly. In particular, if arm 18 is the leading arm, the backing plate ear 58 will be forced into abutting engagement with the outer surface of recess 34 and the backing plate projection 64 will be forced into abutting engagement with the verticle surface of step 68. Consequently, the braking torque transmitted to the caliper assembly is split between a leading portion of the caliper assembly at recess 34 and a trailing portion of the caliper assembly at step 68. The leading portion is in radial alignment with the arms 18 and 20 and the trailing portion is substantially located at the radially inner edge of the leg 28.

Turning to Figure 5, the outer friction element 32 vertically aligns the pair of projections 62 and 64 with the pair of ears 58 and 60. In order to align these parts, the ears 58 and 60 include arcuate edges 72 and 74 which align radially with the arms 18 and 20, respectively when the outer friction element 32 is attached to the caliper assembly. The arms define cut outs 76 and 78 which receive the radially inner surface portions of the caliper assembly defining the recesses 34 and 36.

Viewing Figure 2, when the outer friction element 32 is worn, the caliper assembly 24 moves relative to the torque member to an adjusted position. In the adjusted position the arm 18 overlaps the slot 50 and the arm 20 overlaps the slot 52. Therefore, replacement of the worn outer friction element requires that the caliper assembly be returned to its original position to permit the outer friction element to be withdrawn from the recesses 34 and 36 via slots 50 and 52. However, as the outer friction element 32 is worn, it is trapped in its attached position to prevent unexpected disassembly via the slots 50 and 52, which are covered by the arms.

**Claims**

1. A disc brake assembly comprising a torque member (12) fixedly disposed adjacent a rotor (14) to be braked and including a pair of arms (18, 20) extending axially over the periphery of the rotor, a caliper assembly (24) movably carried by the pair of arms and cooperating with a pair of friction elements (30, 32) to urge the latter into engagement with the rotor during braking, and the caliper assembly including a pair of axially extending grooves (34, 36) for receiving the pair of arms, characterized by one (34) of said pair of grooves including a slot (50) and one (32) of said pair of friction elements is received within said slot and disposed in abutting relation with the wall of said one groove in order to attach said one friction element (32) to said caliper assembly (24).

2. The disc brake assembly of claim 1 in which said caliper assembly carries a hydraulic actuator (26) on one side of said rotor and said caliper assembly includes a reaction leg (28) extending radially on the other side of said rotor, said one groove (34) intersecting said reaction leg and said slot (50) being axially disposed on said one groove (34) substantially adjacent said reaction leg (28).

3. The disc brake assembly of claim 2 in which said reaction leg defines a step (66) radially inwardly of said one groove (34) and said one friction element includes a projection (62) engageable with said step (66) when said one friction element (32) is also in abutting relation with the wall of said one groove (34).

4. The disc brake assembly of claim 1 in which each of said pair of grooves include a slot (50, a 52) and said one friction element (32) is received radially into each slot (50, 52) and movable axially within each of said pair of grooves (34, 36) away from each slot to an attached position on said caliper assembly (24).

5. The disc brake assembly of claim 4 in which said caliper assembly (24) includes a hydraulic actuator (26) on one side of said rotor and a reaction leg (28) on the other side of said rotor, said reaction leg including a pair of steps (66, 68) substantially aligned vertically with said pair of grooves (34, 36) and said one friction element (32) includes a pair of projections (62, 64) disposed within said pair of steps, respectively, such that torque transmitted to said one friction element (32) is transferred to said caliper assembly via said one groove (34) and one (68) of said steps non-aligned with said one groove (34).

6. The disc brake assembly of claim 1 in which said caliper assembly (24) is movable relative to said torque member (12) in response to wear of said pair of friction elements and one (18) of said pair of arms overlaps said slot (50) when said pair of friction elements (30, 32) are worn a predetermined amount.

7. The disc brake assembly of claim 1 in which said one groove (34) is V shaped with a radially outer surface and a radially inner surface defining an angle therebetween, and said slot is located on said radially inner surface.

8. The disc brake assembly of claim 1 in which said one friction element (32) includes a friction pad (56) engageable with said rotor and a pair of ears (58, 60) extending radially outwardly of said friction pad (56), and said pair of ears (58, 60) also extend circumferentially toward each other fit into said pair of grooves (34, 36).

**Patentansprüche**

1. Scheibenbremse mit einem Bremsträger (12), der angrenzend an einer Bremsscheibe (14) ortsfest angebracht ist und zwei Arme (18, 20) aufweist, die sich axial über den Umfang der Bremsscheibe erstrecken, einem Bremssattel (24), der von den beiden Armen beweglich getragen wird und mit zwei Bremsbacken (30, 32) zusammenwirkt, um diese beim Bremsen in Anlage mit der Bremsscheibe zu drücken, wobei der Bremssattel zwei axial verlaufende Nuten (34, 36) zur Aufnahme der beiden Arme aufweist, dadurch gekennzeichnet, daß eine (34) der beiden Nuten einen Schlitz (50) aufweist und daß einer (32) der beiden Bremsbacken von dem Schlitz aufgenommen wird und an der Wand der besagten einen Nut anliegt, um den besagten Bremsbacken (32) am Bremssattel (24) zu befestigen.

2. Scheibenbremse nach Anspruch 1, bei der der Bremssattel eine hydraulische Betätigungsvorrichtung (26) auf einer Seite der Bremsscheibe trägt und der Bremssattel einen Reaktionsschenkel (28) aufweist, der auf der anderen Seite der Bremsscheibe radial verläuft, wobei die besagte eine Nut (34) den Reaktionsschenkel schneidet und der Schlitz (50) axial an der besagten einen Nut (34) angrenzend an dem Reaktionsschenkel (28) verläuft.

3. Scheibenbremse nach Anspruch 2, bei der der Reaktionsschenkel eine Stufe (66) radial innerhalb der besagten einen Nut (34) bildet und der besagte eine Bremsbacken einen Vorsprung (62) aufweist, der an der Stufe (66) angreift, wenn sich der besagte eine Bremsbacken (32) in Anlage mit der Wand der besagten einen Nut (34) befindet.

4. Scheibenbremse nach Anspruch 1, bei der jede der beiden Nuten einen Schlitz (50, 52) aufweist und der besagte einen Bremsbacken (32) sich radial in jeden Schlitz (50, 52) hineinerstreckt und axial innerhalb jeder der beiden Nuten (34, 36) weg von jedem Schlitz zu einer festgelegten Stellung am Bremssattel (24) bewegbar ist.

5. Scheibenbremse nach Anspruch 4, bei der der Bremssattel (24) eine hydraulische Betätigungsvorrichtung (26) auf einer Seite der Bremsscheibe und einen Reaktionsschenkel (28) auf der anderen Seite der Bremsscheibe umfaßt, wobei der Reaktionsschenkel zwei Stufen (66, 68) aufweist, die zu den beiden Nuten (34, 36) im wesentlichen vertikal ausgerichtet sind, und daß der eine Bremsbacken (32) zwei Vorsprünge (62, 64) aufweist, die in den beiden Stufen derart angeordnet sind, daß ein auf den besagten einen Bremsbacken (32) übertragenes Bremsmoment auf den Bremssattel über die besagte eine Nut (34) und eine (68) der zu der besagten einen Nut (34) nicht ausgerichteten Stufen übertragen wird.

6. Scheibenbremse nach Anspruch 1, bei der der Bremssattel (24) relativ zum Bremsträger (12) in Abhängigkeit von einer Abnutzung der beiden Bremsbacken beweglich ist und einer (18) der beiden Arme den Schlitz (50) überlappt, wenn die beiden Bremsbacken (30, 32) um einen vorgegebenen Betrag abgenutzt sind.

7. Scheibenbremse nach Anspruch 1, bei der die besagte eine Nut (34) V-förmig ist, wobei eine radial äußere Flache und eine radial innere Fläche zwischen sich einen Winkel einschließen, und der Schlitz an der radial inneren Fläche vorgesehen ist.

8. Scheibenbremse nach Anspruch 1, bei der der eine Bremsbacken (32) einen an die Bremsscheibe anlegbaren Reibbelag (56) und zwei Ansätze (58, 60) aufweist, die sich von dem Reibbelag (56) radial nach außen erstrecken, wobei die beiden Ansätze (58, 60) sich außerdem in Umfangsrichtung aufeinander zu erstrecken, um in die beiden Nuten (34, 36) zu passen.

## Revendications

1. Frein à disque comprenant un élément de poussée (12) fixé près d'un rotor (14) à freiner et comprenant deux bras (18, 20) qui s'étendent axialement sur la périphérie du rotor, un étrier (24) supporté de façon mobile par les deux bras et coopérant avec deux éléments de friction (30, 32) pour presser ces éléments en contact avec le rotor pendant le freinage, et l'étrier comprenant deux rainures axiales (34, 36) destinées à recevoir les deux bras, caractérisé en ce qu'une (34) de la paire présente une encoche (50) et un élément de friction (32) de la paire est reçu dans cette encoche et disposé en contact avec la paroi de cette rainure afin de fixer ledit élément de friction (32) à l'étrier (24).

2. Frein à disque suivant la revendication 1, dans lequel l'étrier porte un cylindre hydraulique d'actionnement (26) d'un côté du rotor et comprend un organe de réaction (28) qui s'étend radialement de l'autre côté du rotor, ladite rainure (34) recoupant l'organe de réaction et l'encoche (50) étant disposée axialement sur ladite rainure (34) en substance près de l'organe de réaction (28).

3. Frein à disque suivant la revendication 2, dans lequel l'organe de réaction comprend un cran (66) radialement vers l'intérieur de la première rainure (34) et ledit élément de friction comprend une saillie (62) pouvant être engagée avec le cran (66) lorsque cet élément de friction (32) est également en contact avec le paroi de la rainure (34).

4. Frein à disque suivant la revendication 1, dans lequel chaque rainure de la paire comprend une encoche (50, 52) et ledit élément de friction (32) est reçu radialement dans chaque encoche (50, 52) et est mobile axialement dans chaque rainure (34, 36) de la paire dans un sens s'écartant de chaque encoche vers une position fixée sur l'étrier (24).

5. Frein à disque suivant la revendication 4, dans lequel l'étrier (24) comprend un cylindre hydraulique d'actionnement (26) d'un côté du rotor et un organe de réaction (28) de l'autre côté du rotor, l'organe de réaction comprenant deux crans (66, 68) en substance en ligne verticalement avec les deux rainures (34, 36) et le premier élément de friction (32) comprenant deux saillies (62, 64) disposées dans les deux crans, respectivement, de façon, que le couple transmis au premier élément de friction (32) soit transféré à l'étrier par l'intermédiaire de la rainure (34) et d'un cran (68) non aligné avec la rainure (34).

6. Frein à disque suivant la revendication 1, dans lequel l'étrier (24) est mobile par rapport à l'élément de poussée (12) en réaction à l'usure des deux éléments de friction et un bras (18) de la paire chevauche l'encoche (50) lorsque les deux éléments de friction (30, 32) sont usés dans une mesure prédéterminée.

7. Frein à disque suivant la revendication 1, dans lequel ladite rainure (34) a la forme d'un V et présente une surface radialement externe et une surface radialement interne définissant un angle entre elles et l'encoche est située sur la surface radialement interne.

8. Frein à disque suivant la revendication 1, dans lequel ledit élément de friction (32) comprend un patin de friction (56) pouvant être engagé avec le rotor et deux oreilles (58, 60) qui s'étendent radialement vers l'extérieur du patin de friction (56) et les deux oreilles (58, 60) s'étendent aussi circonférentiellement l'une vers l'autre de manière à s'engager dans les deux rainures (34, 36).

FIG. 1

FIG. 2

FIG. 3

FIG. 4

FIG. 5